# EUROPEAN PATENT APPLICATION

(11) **EP 2 918 560 A1**
(43) Date of publication of application: **16.09.2015**
(21) Application number: 13853536.4
(22) Date of filing: 31.10.2013
(51) Int. Cl.: C03C 8/00, B41J 2/045, B41M 1/34

(54) **DIGITAL GLAZE COMPOSITION FOR INK JET PRINTING**

(30) Priority: 12.11.2012 ES 201231722
(71) Applicant: Torrecid, S.A., 12110 Alcora (Castellón) (ES)
(72) Inventor: FORÉS FERNANDES, Alejandro, E-12110 Castellón (ES); TIRADO FRANCISCO, Francisco Alejandro, E-12110 Castellón (ES); RIBES TORNER, Jorge, E-12110 Castellón (ES); ALTABA TENA, Raúl, E-12110 Castellón (ES); CORTS RIPOLL, Juan Vicente, E-12110 Castellón (ES); GUILLAMÓN VIVAS, Enrique, E-12110 Castellón (ES)
(74) Representative: Carlos Hernando, Borja
(86) International application number: PCT/ES2013/070759
(87) International publication number: WO 2014/072553

(57) **Abstract**

Digital glaze composition for ceramic supports comprising, at least one water-free solvent formed by a mixture of polar and/or non-polar or low-polarity solvents as a vehicle that is liquid at room temperature, at least one mixture of inorganic particles of frits and/or raw materials, without the use of inorganic pigment particles, as a glazing-forming material and, at least one dispersant. All prepared in such a way that the physical properties of the digital glaze such as particle size, viscosity, surface tension, sedimentation speed and sintering and softening temperatures, are suitable for achieving the necessary final base finishing quality with the required weights. The special composition of the digital glaze also allows the use thereof as ink for decoration and ink for protection.

## Description

### Object of the invention

The object of the present invention are digital glazes suitable for application by different digital ink jet techniques and which provide the same aesthetic and technical features than traditional glazes that are currently used with other application techniques.

### Description of the state of the art

The digital glazes object of the present invention are intended primarily for digital injection systems using printheads working in the Drop On Demand system (DOD) based on piezoelectric to generate corresponding drops and with shooting frequencies of the order of several kHz, which is not a limitation for them to be used with other digital injection techniques such as continuous ink jet (CIJ), electrovalves, pistons or others such as those described in EP2085225B1 or international application WO2006027212.

By properly using DOD technology it is possible to competitively apply, from an industrial point of view, weights close to 200 g/m², an amount that, together with the particular features of digital glazes object of the present invention, make it possible to obtain continuous glazes on ceramic substrates, similar to those achieved with traditional glazes using non-digital application techniques. In fact, the preferred use of digital glazes object of the present invention focuses on a weight lower than 150 g/m² and more preferably 100 g/m².

The ink jet technique has been used for some years in the ceramic and glass industry to print decorative motifs, having partially substituted other decorative techniques such as screen printing, rotogravure, etc. These ink jet inks are characterized by containing mainly particles of inorganic pigments which are those that provide the necessary colors and shades and optionally frits accompanying the ceramic pigments, as is described in patents ES2170667, US6357868, ES2257957 or US5407474.

Pigmented inks are printed onto layers of raw traditional glazes previously applied by conventional techniques not based on digital means (spraying, curtain, disk, etc.) and which are widely known and used both in the ceramic and the glass sector. The glaze layer is necessary to confer the final base finishing to the ceramic tile after the firing process. It can range from a completely glossy finish to matt surfaces, passing through all the intermediate steps, while once the glaze has been fired it can also provide transparent, opaque or translucent coatings. Also from a viewpoint related to the final texture of the ceramic tile, glazes allow obtaining different finishes, such as slippery, rough, glossy, etc. Another function of the glaze is to fully protect the clay ceramic support or the glass itself and to provide it with the final technical properties in terms of resistance to abrasion, wear, chemical attack, etc. Furthermore, when the glaze melts during the firing process, it also serves to set the decoration applied by any method, including injection of pigmented inks.

There are cases in which inks are printed directly onto non-porous surfaces, such as unglazed glass or already fired ceramic tiles. In such cases, the inks contain frit particles or other fluxing materials together with the ceramic pigments with the aim of providing the ink with the adhesion to the surface in question during the firing process, such as is stated in patents EP 1658342 B1 and ES2384269T3.

In no case, neither in the case of pigmented inks containing only ceramic pigments, nor in the case of those also containing fluxing particles, can these inks be used as a glaze that meets all the functions described above (protecting the base support, conferring technical and aesthetic final properties, etc.). Specifically, in the case of pigmented inks containing only ceramic pigment, because of the refractory nature of these, they cannot form glassy phases during the firing process which provide continuous glaze covering the entire base support both made of clay and glass. Similarly, in the case of inks containing fluxing particles in addition to ceramic pigments, said fluxing particles will not form continuous glaze covering the entire base support because their softening temperature is too low (<600°C) and at the firing temperature of ceramic tiles (>1,000 °C) it would boil with the consequent appearance of bubbles that would provide an open porosity which, in turn, would make the ceramic tile produced unviable. In fact, these fluxing particles in the present invention are selected from those having a low softening temperature in order to fulfill the function for which they are incorporated into the ink, which is to fix the ceramic pigment particles to the non-porous glass or ceramic surface. Another reason why these frits could not be used as glazing-forming material is their high coefficient of expansion (>0.9 x 10⁻⁵ °C⁻¹), very different to that of ceramic supports (0.70-0.75 x 10⁻⁵ °C⁻¹) which would cause crazing of the entire glazing, creating areas where said glazing would jump due to existing tensions, etc.

On the other hand, patent application ES2386267 describes water-based digital glaze inks, with particle size in the order of tens of microns (up to 40 µm), viscosity between 20-70 cps and surface tension higher than 30 mN/m. All these features clearly indicate that this type of digital glaze inks are not suitable for use in DOD digital printing technology based on piezoelectric with shooting frequency in the order of several KHz, wherein the use of water in the formulation of the inks and glazes is not recommended, the particle size should be less than 1 µm, the viscosity less than 20 cps and the surface tension should be in the order of 30 mN/m, advisably somewhat less than this value, and all of this irrespective of the brand of injection head used (Dimatix, Xaar, Seiko, Toshiba, K&M, Kyocera, Ricoh, etc.). Moreover, the glaze inks described in patent ES2386267 do not meet the stability requirements required by the DOD digital printing technology, since according to the formulations contained therein said glaze inks have a very high tendency to sedimentation which would cause the clogging of the filters and of the nozzles or orifices of the injection heads.

As noted above, the traditional glaze is applied by conventional techniques (spraying, curtain, disk, etc.) and there are no any digital glaze solutions that can be applied by the DOD ink jet digital technique based on piezoelectric with shooting frequency of several KHz and that, therefore, allow to harness all the competitive advantages that the digital techniques provide to industrial applications and which are widely known in the state of the art.

### Description of the invention

The digital glazes object of the present invention, cannot be obtained by direct reduction of the particle size of the traditional glazes that are applied by methods not based on digital technology, such as spraying, curtain, disk, rollers, etc., as the characteristics of flux, coefficient of expansion, viscosity and melt surface tension, etc. completely change when passing from a mean particle size in the order of microns, as is the case of the traditional glazes, to having a particle size less than 1 µm expressed as D90, as is the case of the digital glazes object of the present invention. Due to this, by simply reducing the particle size, no continuous glaze with the aesthetics and technical features required by the ceramics industry are obtained after the firing. In fact, the minimum weight that must be applied to the traditional glazes with non digital technologies to achieve continuous glazie with the required technical and aesthetics features is in the order of 400 g/m², against less than 200 g/m², preferably less than 150 g/m² and more preferably less than 100 g/m² which are necessary with the digital glazes object of the present invention.

In this sense, whereas with the traditional glazes is very important to control the coefficient of expansion of the same and it should be very similar to that of the ceramic support (typical value of 70x10⁻⁷ °C⁻¹), being in a range comprised between 65x10⁻⁷ °C⁻¹ and 75x10⁻⁷ °C⁻¹, due to the special features of the digital glazes object of the present invention this parameter becomes irrelevant, making it possible to formulate glazes over a wide range of values of coefficients of expansion, from 50x10⁻⁷ °C⁻¹ to 80x10⁻⁷ °C⁻¹. This is a great advantage from a production point of view because it indicates that the use of the digital glazes object of the present invention completely minimizes the problems related to the curvature of the parts, chips, cracks, etc.

Moreover, when the particle size is reduced, the chemical nature of the surface of the same also changes due to the appearance of a greater number of active break points and, therefore, of radicals capable of reacting with stabilizing agents, dispersants, anti-foaming agents, etc.

Another differentiator between the digital glazes object of the present invention and the traditional glazes is the liquid medium in which the particles are suspended. While the traditional glazes are based on aqueous formulations, this liquid medium is not suitable for the formulation of the digital glazes, as glazes that are not sufficiently stable for use in the DOD ink jet printing equipment based on piezoelectric with shooting frequency of several KHz would be obtained, resulting in problems of filter clogging, nozzles, evaporation during printing, etc. that would make its use in industrial applications impossible.

Additionally, conductivity problems would also appear as the glazes based in aqueous media have a higher conductivity than that recommended by the manufacturers of injection heads, which could cause short circuits in said injection heads causing defects in the printed piece and making its industrial application impossible.

Likewise, the presence of water in the composition provides inks which have a very high drying speed due to the low evaporation temperature of water compared to other solvents. It must be borne in mind that the glazing of ceramic parts is performed mostly when the part is hot, at a temperature which normally exceeds 45 °C and on many occasions being able to reach 60-70 °C. When ceramic parts pass under printing equipment they radiate heat towards the same. Since the distance between the head and the ceramic parts is only 1-1.5 mm, the radiated heat tends to raise the temperature of the head and causes the evaporation of the solvents in the ink, which is forming a very thin layer on the outer side of the head where the orifices of the nozzles (face-plate) are. The evaporation of the solvent increases the viscosity of the digital glaze, which can dry on the face plate and seal the orifices.

Another different issue between the digital glazes object of the present invention and the traditional glazes are the rheological conditions thereof. While the traditional glazes are characterized by having a viscosity higher than 40 cps, in order for the digital glazes to be capable of being used in the DOD injection printheads based on piezoelectric with shooting frequency of several KHz, said viscosity should be less than 30 cps, preferably less than 20 cps.

The fact of having to use a liquid medium other than water, the change in the chemical nature of the surface of the particles when their size is reduced and the different rheological conditions, also make necessary the use of stabilizing agents, dispersants, anti-foaming agents etc. completely different from those used in the traditional glazes.

While in traditional glazes clay materials, kaolin and the like are used as anti-settling agents, mainly polyphosphates are used as dispersants and glues mainly based on carboxymethylcellulose are used as binding agents, in the digital glazes object of the present invention it is necessary to use other type of organic compounds such as carboxylic acid copolymers, hyperdispersants, polymeric fatty esters, polyamides, derivatives of aromatic hydrocarbons, phosphate salts of polymers with acid groups, urea derivatives, polyether modified polydimethyl siloxanes, among others.

Due to the small particle size of the digital glazes object of the present invention, the use of anti-settling agents is not necessary, but essentially dispersants, which instead of interacting with the liquid medium interact with the particles, chemically reacting with the free radicals of the surface of the same and establishing chemical bonds which, either by steric phenomena or by electrostatic phenomena, prevent the particles from agglomerating, remaining separate and as a result their tendency to sedimentation is much lower. Moreover, since the particles are separated and have low viscosity, the fluid can flow easily throughout the circuit without causing clogging problems in filters, deaerators, nozzles, etc.

The dispersing additives used are derivatives of aromatic hydrocarbons, polyamides and phosphate salts of polymers with acid groups, mostly polymeric dispersants, based on polyurethane, polyesters, with different functionality depending on the type of particle for which they are designed (acidic groups, basic groups, etc). There are also dispersants based on phosphate esters and acrylic dispersants but they are used less in low polarity solvents.

The wetting additives (reduce the surface tension facilitating the homogeneous wetting of the face plate) are usually derived from polysiloxanes with different ends (for example, polyether modified polydimethyl siloxanes).

The anti-foaming additives prevent formation of foam or destroy it rapidly. Usually, they are derived from polysiloxanes, sometimes combined with silica.

The thickening additives increase the viscosity of the ink at low shear gradients increasing the definition and improving the sedimentation. They are usually polyamide derivatives, urea derivatives and castor oil derivatives or a mixture of two or more of the above.

It is therefore essential, since it is the object of the present invention, to carry out specific formulations of digital glazes using mixtures of frits and/or raw materials having the suitable characteristics of flux, coefficient of expansion, viscosity and melt surface tension, among others, and which provide glazes after the firing with the technical and aesthetic features required by the ceramic industry. Likewise, it is also essential to use non-aqueous liquid media and stabilizing agents, dispersants, anti-foaming agents, etc. specific in the formulation of the digital glazes to achieve the stability and rheological conditions suitable for said digital glazes to be used in the DOD ink jet printing equipment based on piezoelectric with shooting frequency of several KHz in industrial applications.

These digital glazes are characterized by:
- Including in their composition a water-free liquid medium formed by a mixture of polar and/or non-polar or low-polarity solvents, such as alcohols, fatty alcohols, aliphatic fatty alcohols, aromatic fatty alcohols, amines, octylamines, cyclic amines, hydrocarbonate solvents, naphthenic solvents, paraffinic solvents, aromatic derivatives such as diisopropylnaphthalene, glycols, polyglycols, esters, branched monoesters, oleic esters, benzoic esters, lactic acid esters, myristic acid esters, palmitic acid esters, fatty acid esters in general, propylene glycol acetates, dipropylene glycol ether acetate, polyethylene glycol acetates, diethylene glycol monobutyl ether acetate, glycol ethers, polypropylene glycol esters, tripropylene glycol monomethyl ether, dipropylene glycol monopropyl ether, dipropylene glycol monobutyl ether, propylene glycol phenyl ether, tripropyleneglycol monobutyl ether and polyethylene glycol ethers, hexyl carbitol ether, phenols, alkylphenols, fatty acids, terpene alcohols, terpene oils, copolymers of vinylpyrrolidone, polyglycols and polypropylene glycol.
- Including in their composition additives such as dispersants, wetting agents, anti-foaming agents, thickeners, etc.
- Including in their composition a mixture of inorganic particles of frits and/or raw materials, without the use of inorganic pigment particles, where the flux material is at least one element selected from frits, sands, feldspars, aluminas, clays, zirconium silicate, zinc oxide, dolomite, calcite, kaolin, quartz, silica, barium carbonate, wollastonite, tin oxide, nepheline, bismuth oxide, colemanite, calcium carbonate, cerium oxide, cobalt oxide, copper oxide, iron oxide, aluminum phosphate, iron carbonate, manganese oxide, sodium fluoride, chromium oxide, strontium carbonate, lithium carbonate, spodumene, talc, magnesium oxide, cristobalite, rutile, bismuth vanadate anatase, vanadium oxide and ammonium pentavanadate, or a mixture of the same.

- Additionally, if it is intended for the digital glaze concerned to provide optical properties in addition to the typical function of the glazes described above, ceramic pigments can be included in the composition of the digital glaze. In any case the percentage of ceramic pigment in the final composition will be low, without exceeding 10% and should not affect the characteristics of flux, coefficient of expansion and viscosity and melt surface tension.
- Particle size less than 1.2 µm expressed as D100, less than 1 µm expressed as D90, less than 0.4 µm expressed as D30 and less than 0.35 µm expressed as D10.
- Viscosity less than 30 cps, preferably less than 20 cps.
- Surface tension less than 35 mN/m, preferably less than 30 mN/m.
- Stability to ensure correct behavior in the printing process characterized in that they have a sedimentation speed lower than 0.1%, preferably comprised between 0.013% and 0.06%. The sedimentation speed is determined with an optical analyzer of stability and instability of liquid dispersions (Turbiscan or similar), and the results are expressed as % by weight of ink sedimented in one hour. The measurement is taken at 3 days and the value is divided by the 72 h forming those 3 days.
- The mixture of frits and/or raw materials has the ability to cover the entire surface of the ceramic tile after the firing process with weights lower than 200 g/m² of green digital glaze, preferably lower than 150 g/m² and more preferably lower than 100 g/m², for which the sintering and softening temperatures should be comprised within the range from 900 to 1,300 °C. The measurement of the sintering and softening temperatures is carried out by means of the technique known as Hot Stage Microscopy and is related to the viscosity and melt surface tension of the glazes, which are characteristics that are fundamental for achieving a continuous glazing.
- Completely minimizing the problems related to the coefficient of expansion (CTE), such as curvature or bending, chips, cracks, etc., being able to use formulations that extend the typical range of CTE values of the traditional glazes from 65x10⁻⁷ °C⁻¹ to 75x10⁻⁷ °C⁻¹, to a range comprised between 50x10⁻⁷ °C⁻¹ and 80x10⁻⁷ °C⁻¹ with the digital glazes according to the invention.

The digital glazes object of the present invention can also be used as ink jet inks applied over base glazes (applied in turn by any method) to achieve certain decorative effects not related with color, such as the micro-relief effect, shine - matt contrast, gloss effect, etc.

The digital glazes object of the present invention can also be used as ink jet inks applied at the end of the glazing line, as the last application after the base glazing and decoration, with the purpose of acting as protection.

### Preferred embodiments

To complete the description being made, with the aim of helping to a better understanding of its features, the present specification is accompanied by several examples of embodiment of digital glazes to provide the final base finishing, according to the invention.

All the examples of embodiment given are provided by way of illustration and without limitation.

### Digital glaze that provides a matte and satin effect

| **Agent/function** | **Component** | **1** | **2** | **3** |
|---|---|---|---|---|
| Solvent 1 | Branched monoester | 40-50 % | | |
| Solvent 2 | Fatty acid ester | < 5% | | |
| Dispersant 1 | Aromatic hydrocarbons derivative | 5-10 % | | |
| Dispersant 2 | Polyamide | < 1% | | |
| Frit 1 | Si, Zn, Ca oxides | -- | 20-30 % | |
| Frit 2 | Si, Al, B, Zr oxides | -- | | 5-15 % |
| Zinc oxide | | <5% | -- | <5% |
| Sodium feldspar | | 15-20% | 15-20% | 15-20% |
| Silica | | <5% | -- | -- |
| Alumina | | 5-10% | 5-10% | -- |
| Barium Sulfate | | 14-19% | -- | 14-19% |
| Sintering T (°C) | | 1,090 | 1,080 | 1,085 |
| Softening T (°C) | | 1,178 | 1,155 | 1,160 |
| Weight (g/m²) | | 90 | 95 | 95 |

### Digital glaze that provides a transparent matte effect

| **Agent/function** | **Component** | **1** | **2** |
|---|---|---|---|
| Solvent 1 | Branched monoester | 20-30 % | 20-30 % |
| Solvent 2 | Fatty acid ester | 30-40 % | 30-40 % |
| Dispersant 1 | Aromatic hydrocarbons derivative | < 5% | < 5% |
| Dispersant 2 | Polyamide | < 5% | < 5% |
| Dispersant 3 | Polymer phosphoric salt with acid groups | 5-10% | 5-10% |
| Frit | Si, Al, Na oxides | | 25-35% |
| Silica | | 8-13% | |
| Alumina | | < 5% | |
| Sodium feldspar | | 15-20 % | |
| Sintering T (°C) | | 1,072 | 1,055 |
| Softening T (°C) | | 1,248 | 1,190 |
| Weight (g/m²) | | 50 | 65 |

### Digital glaze that provides an opaque matte effect

| **Agent/function** | **Component** | **1** | **2** | **3** |
|---|---|---|---|---|
| Solvent 1 | Branched monoester | 40-50% | 40-50% | 40-50% |
| Solvent 2 | Fatty acid ester | 5-10% | 5-10% | 5-10% |
| Dispersant 1 | Aromatic hydrocarbons derivative | 5-10% | 5-10% | 5-10% |
| Dispersant 2 | Polyamide | <5% | <5% | <5% |
| Frit | Si, Al, B, Zr oxides | -- | 40-60% | 20-30% |
| Zirconium | | <10% | -- | <5% |
| Sodium feldspar | | 30-40% | -- | 10-20% |
| Sintering T (°C) | | 1,198 | 1,090 | 1,055 |
| Softening T (°C) | | 1,275 | 1,171 | 1,164 |
| Weight (g/m²) | | 60 | 55 | 80 |

### Digital glaze that provides a shine effect

| Agent/function | Component | 1 | 2 | 3 |
|---|---|---|---|---|
| Solvent 1 | Branched monoester | 40-50% | | |
| Solvent 2 | Fatty acid ester | 4-9% | | |
| Dispersant 1 | Aromatic hydrocarbons derivative | 5-10% | | |
| Dispersant 2 | Polyamide | <5% | | |
| Frit 1 | Si, Al, B, Zn, Na, Ca oxides | 40-50% | 35-45% | |
| Frit 2 | Si, Al, B, Zn oxides | -- | -- | 20-30% |
| Silica | | -- | <5% | <5% |
| Sodium feldspar | | -- | <5% | 10-15% |
| Sintering T (°C) | | 1,122 | 1,068 | 1,082 |
| Softening T (°C) | | 1,230 | 1,165 | 1,173 |
| Weight (g/m²) | | 100 | 125 | 125 |

The preparation of the digital glazes with the indicated effects is performed by conventional procedures generally used in the industry.

## Claims

1. Digital glaze composition for printing on ceramic supports **characterized in that** the ink composition comprises:
a. At least one medium that is liquid at room temperature, water-free and formed by a mixture of polar and/or non-polar or low-polarity solvents
b. At least one mixture of inorganic particles of frits and/or raw materials as a glaze-forming material, without the use of inorganic pigment particles and
c. At least one dispersant.

2. Digital glaze composition, according to claim 1, **characterized in that** it covers the entire surface of the ceramic tile after the firing process with weights lower than 200 g/m² of green digital glaze ink.

3. Digital glaze composition, according to the previous claim, **characterized in that** it covers the entire surface of the ceramic tile after the firing process with weights lower than 150 g/m² and more preferably lower than 100 g/m².

4. Digital glaze composition, according to the previous claim, **characterized in that** it covers the entire surface of the ceramic tile after the firing process with weights lower than 100 g/m².

5. Digital glaze composition, according to claim 1, **characterized in that** the mixture of inorganic particles of frits and/or raw materials has a particle size less than 1.2 µm.

6. Digital glaze composition, according to any of the previous claims, **characterized in that** 90 % of the mixture of inorganic particles of frits and/or raw materials has a particle size less than 1 µm.

7. Digital glaze composition, according to any of the previous claims, **characterized in that** 30 % of the mixture of inorganic particles of frits and/or raw materials has a particle size less than 0.4 µm.

8. Digital glaze composition, according to any of the previous claims, **characterized in that** 10 % of the mixture of inorganic particles of frits and/or raw materials has a particle size less than 0.35 µm.

9. Digital glaze ink composition, according to any of the previous claims, **characterized in that** in the mixture of inorganic particles of frits and/or raw materials as a glaze-forming material, without the use of inorganic pigment particles, at least one element selected from frits, sands, feldspars, aluminas, clays, zirconium silicate, zinc oxide, dolomite, calcite, kaolin, quartz, silica, barium carbonate, wollastonite, tin oxide, nepheline, bismuth oxide, colemanite, calcium carbonate, cerium oxide, cobalt oxide, copper oxide, iron oxide, aluminum phosphate, iron carbonate, manganese oxide, sodium fluoride, chromium oxide, strontium carbonate, lithium carbonate, spodumene, talc, magnesium oxide, cristobalite, rutile, bismuth vanadate anatase, vanadium oxide and ammonium pentavanadate, or a mixture of the same is used.

10. Digital glaze composition, according to claim 1, **characterized in that** the viscosity is less than 30 cps.

11. Digital glaze composition, according to the previous claim, **characterized in that** the viscosity is less than 20 cps.

12. Digital glaze composition, according to claim 1, **characterized in that** the surface tension is less than 35 mN/m.

13. Digital glaze composition, according to the previous claim, **characterized in that** the surface tension is less than 30 mN/m.

14. Digital glaze composition, according to claim 1, **characterized in that** the sedimentation speed is less than 0.1 %.

15. Digital glaze composition, according to the previous claim, **characterized in that** the sedimentation speed is comprised between 0.013% and 0.06%.

16. Digital glaze composition, according to claim 1, **characterized in that** the sintering and softening temperatures should be comprised within the range from 900 to 1,300 °C.

17. Digital glaze composition, according to claim 1 **characterized in that** the dispersing additives used are derivatives of aromatic hydrocarbons, polyamides and phosphate salts of polymers with acid groups, polymeric dispersants, based on polyurethane, polyesters, or a mixture of the above.

18. Digital glaze composition, according to claim 1, **characterized in that** the liquid vehicle consists of alcohols, fatty alcohols, aliphatic fatty alcohols, aromatic fatty alcohols, amines, octylamines, cyclic amines, hydrocarbonate solvents, naphthenic solvents, paraffinic solvents, aromatic derivatives such as diisopropylnaphthalene, glycols, polyglycols, esters, branched monoesters, oleic esters, benzoic esters, lactic acid esters, myristic acid esters, palmitic acid esters, fatty acid esters in general, propylene glycol acetates, dipropylene glycol ether acetate, polyethylene glycol acetates, diethylene glycol monobutyl ether acetate, glycol ethers, polypropylene glycol esters, tripropylene glycol monomethyl ether, dipropylene glycol monopropyl ether, dipropylene glycol monobutyl ether, propylene glycol phenyl ether, tripropyleneglycol monobutyl ether and polyethylene glycol ethers, hexyl carbitol ether, phenols, alkylphenols, fatty acids, terpene alcohols, terpene oils, copolymers of vinylpyrrolidone, polyglycols and polypropylene glycol or a mixture of the above.

19. Digital glaze composition, according to any of the previous claims **characterized by** including ceramic pigments in the composition in percentages less than 10% by weight of the final composition.

20. Digital glaze composition, according to claim 1, **characterized in that** it comprises at least one wetting agent.

21. Digital glaze composition, according to the previous claim, **characterized in that** the wetting agent is a derivative of polysiloxanes with different ends.

22. Digital glaze composition, according to the previous claim, **characterized in that** the wetting agent is polyether modified polydimethyl siloxane.

23. Digital glaze composition, according to claim 1, **characterized in that** it comprises at least one anti-foaming agent.

24. Digital glaze composition according to the previous claim, **characterized in that** the anti-foaming agent is a derivative of polysiloxanes, sometimes combined with silica.

25. Digital glaze composition, according to the previous claim, **characterized in that** the anti-foaming agent is a derivative of polysiloxanes combined with silica.

26. Digital glaze composition, according to claim 1, **characterized in that** it comprises at least one thickening agent.

27. Digital glaze composition, according to the previous claim, **characterized in that** the thickening agent is a derivative of polyamides.

28. Digital ink composition, according to claim 26, **characterized in that** the thickening agent is a derivative of urea.

29. Digital glaze composition, according to claim 26, **characterized in that** the thickening agent is a derivative of castor oil.

30. Digital glaze composition, according to claim 26, **characterized in that** the thickening agent is a mixture of two or more components selected from polyamide derivatives, urea derivatives and castor oil derivatives.

31. Digital glaze composition, according to claim 1, **characterized in that** the coefficient of expansion is comprised between 50x10⁻⁷ °C⁻¹ and 80x10⁻⁷ °C⁻¹.

32. Digital glaze composition, according to claim 1, **characterized in that** it can be used as ink jet ink for decoration, applied over base glazes previously applied to ceramic supports.

33. Digital glaze composition, according to claim 1, **characterized in that** it can be used as ink jet ink for protection, applied over the decoration previously applied to ceramic supports.
